# FASCICULE DE BREVET EUROPEEN

(11) **EP 1 495 541 B1**
(45) Date de publication et mention de la délivrance du brevet: **27.07.2011**
(21) Numéro de dépôt: 03712553.1
(22) Date de dépôt: 11.04.2003
(51) Int. Cl.: H03K 17/94, H03K 17/945, G08C 17/02

(54) **PROCEDE D'INTERPRETATION D'UN ORDRE RADIO-ELECTRIQUE**
VERFAHREN ZUR AUSWERTUNG EINES FUNKSIGNALES
METHOD FOR INTERPRETATION OF A RADIO-ELECTRICAL COMMAND

(30) Priorité: 16.04.2002 FR 0204742
(43) Date de publication de la demande: 12.01.2005
(73) Titulaire: Somfy SAS, 74300 Cluses (FR)
(72) Inventeur: MARTY, Jacques, F-81360 Montredon Labessonnie (FR)
(74) Mandataire: Bugnion Genève
(86) Numéro de dépôt international: PCT/IB2003/001455
(87) Numéro de publication internationale: WO 2003/088486

(56) Documents cités:
- WO-A-98/02860
- US-A- 4 016 553
- US-B1- 6 218 932

## Description

L'invention se rapporte au domaine de la commande à distance entre transmetteur d'ordres et récepteur d'ordres de type radio-électrique. Plus précisément, l'invention se rapporte aux applications dans lesquelles au moins un mode de fonctionnement impose une relation de proximité entre ces dispositifs, notamment dans les domaines du contrôle d'accès, qu'il s'agisse d'un bâtiment, d'une automobile ou des fonctionnalités d'un équipement piloté par une telle commande à distance.

L'invention a plus particulièrement pour objet un procédé d'interprétation d'un ordre radio-électrique selon sa zone d'émission. L'invention a encore pour objet un dispositif récepteur d'ordres défini selon le préambule de la revendication 5.

Les équipements de motorisation de portails ou de portes de garage avec commande radiofréquences tels que décrit dans US 4,750,118 contiennent en général un bouton poussoir servant à la mise en mode d'apprentissage du récepteur d'ordres. Une fois placé en mode d'apprentissage, le récepteur d'ordres peut ainsi enregistrer l'identifiant du premier transmetteur d'ordres qui sera actionné, lequel devient alors valide pour commander des manoeuvres de l'élément piloté par le récepteur d'ordres. La sécurité de ce mode d'apprentissage tient au fait que l'équipement est placé à l'intérieur de la propriété, et que seul le propriétaire est censé pouvoir accéder au bouton poussoir. Il est clair que, pour éviter d'apprendre un émetteur distant émettant dans la même plage temporelle, il faut réduire la durée de ce mode d'apprentissage. L'idéal est de demander un appui permanent sur le poussoir du récepteur d'ordres, pendant qu'on appuie sur une touche du transmetteur d'ordres à apparier, mais ce procédé n'est guère confortable. Pour des raisons de coût et d'ergonomie, on peut donc souhaiter se passer d'un tel bouton poussoir propre au récepteur d'ordres, et directement utiliser la télécommande nomade constituant le transmetteur d'ordres. On devra alors, dans ce mode particulier de mise en apprentissage, avoir la certitude que les deux éléments sont distants de quelques centimètres ou dizaines de centimètres seulement.

Il est connu, comme décrit dans EP 0 921 507 de réduire la sensibilité des récepteurs. Mais il est clair qu'un tel récepteur à sensibilité réduite peut être abusé par un émetteur surpuissant.

Dans un domaine voisin, les équipements de grilles pour fermetures industrielles ou commerciales nécessitent un fonctionnement de type « homme mort », communément réalisé avec un interrupteur monostable à clé. Le fait de disposer cet interrupteur à proximité de la grille garantit que l'utilisateur a la vue sur le dispositif en mouvement, pour éviter tout accident. Pour des raisons de vandalisme, et de commodité, il serait souhaitable de pouvoir remplacer cet ensemble clé-serrure par une simple télécommande (pouvant par ailleurs servir à d'autres applications de commande d'éclairages ou de protections solaires). Dans le mode « homme mort », il est donc impératif que cette télécommande ne marche qu'à proximité du récepteur d'ordres pouvant être disposé dans la maçonnerie ou derrière une vitre de manière à éviter tout vandalisme.

Il existe donc un besoin d'un procédé et de moyens garantissant qu'un émetteur d'ordres de type radio-électrique, dont la portée normale est comprise entre une dizaine et plusieurs centaines de mètres, se trouve localisé à proximité immédiate du récepteur d'ordres pour valider la transmission d'ordres particuliers. Ce procédé et ces moyens ne devant en aucun cas être abusés par un émetteur distant surpuissant.

La mesure différentielle sur deux antennes placées à distance est largement connue de l'homme du métier pour déterminer la direction d'un émetteur lointain selon les méthodes de radiogoniométrie. Dans une installation classique, on peut utiliser deux bobines perpendiculaires globalement orientables par rotation autour de leur diamètre commun. L'identité des signaux reçus donne la direction de l'émission. Cette direction peut aussi être déterminée à partir du rapport des intensités reçues par chaque bobine si celles-ci sont fixes.

Le brevet US 3,553,699 décrit un appareil de détection de la direction d'une source radio dans lequel ces deux antennes perpendiculaires fixes sont combinées avec des sondes à effet Hall utilisées comme modulateurs.

On notera que ces installations nécessitent deux bobines perpendiculaires, et ne sont utilisées ni pour une mesure de distance ni pour une détection de proximité de la source.

Dans le domaine de la détermination angulaire, il est possible de disposer d'antennes placées cette fois à distance et dans un même plan, mais en ayant recours à des mesures directes de déphasage sur les signaux reçus, comme décrit dans US 3,697,997 ou encore par intercorrélation comme dans US 4,876,549.

Ces méthodes plus ou moins complexes ne peuvent en aucun cas s'appliquer à une mesure de distance ou à une détection de proximité de la source, puisqu'une mesure de déphasage ne peut être exploitée qu'à un nombre entier de longueurs d'onde près.

Il a été envisagé cependant, pour des applications relatives au contrôle d'accès, de prévoir plusieurs modes de communication entre transpondeur nomade et récepteur fixe. Le brevet US 5,552,641 décrit ainsi un système de sécurité pour automobile. On remarquera que ce système contient deux antennes pouvant servir en réception et pouvant être disposées dans un même plan lorsque placées par exemple dans les rétroviseurs extérieurs du véhicule. Mais chaque antenne est individuellement raccordée à au moins un récepteur radio HF ou BF. Le but visé est d'assurer notamment une redondance suffisante pour garantir au moins une bonne transmission sur l'un des circuits de communication, entre la base fixée dans l'automobile et le transpondeur nomade. L'invention prévoit que, selon le récepteur activé, on puisse déterminer quelle porte ouvrir.

Pour le même type d'application, le brevet US 5,751,073 décrit un module d'activation RFA pouvant comporter deux antennes dont l'une est destinée à la détection extérieure du transmetteur, alors que l'autre est destinée à sa détection intérieure. Le transmetteur peut être un transpondeur.

Enfin, le brevet US 6,087,987 décrit un procédé de localisation d'un composant de validation (transpondeur) à l'intérieur d'un habitacle d'automobile. Ce procédé est basé sur la mesure des amplitudes ou intensités de champ mesurées, de manière individuelle, par au moins deux émetteur-récepteurs disposés dans l'habitacle, chacun de ces émetteur-récepteurs étant donc muni d'un dispositif de mesure d'intensité.

Pour l'un et l'autre de ces brevets, on notera qu'il est utilisé le fait qu'une liaison « distante » avec un transpondeur est de faible portée, par exemple limitée à un mètre. Il n'est nullement utilisé une relation de champ proche. Par exemple, il est écrit en colonne 4 lignes 53-59 du brevet US 6,087,987 que la puissance reçue décroît de manière quadratique avec la distance. Une telle décroissance en 1/r² (où r est la distance de l'émetteur au récepteur) est caractéristique de conditions de champ lointain, alors que la décroissance en champ proche est en 1/r, comme connu de l'homme du métier et par exemple mentionné dans « Reference Data for Engineers - Ninth Edition - Marc E.Van Valkenburg, Wendy M. Middleton - Newnes » page 32-7.

Le dispositif décrit dans US 6,087,987 peut parfaitement être abusé par un faux transpondeur, qui contiendrait à la fois un récepteur très sensible et un émetteur surpuissant, disposé à l'extérieur du véhicule, voire à quelques dizaines de mètres de celui-ci. En effet, en ne tenant pas compte des effets d'atténuation liés à la carrosserie métallique, chacun des récepteurs recevra alors un signal de puissance pratiquement égale et le système conclura logiquement à la présence d'un transpondeur au centre de l'habitacle.

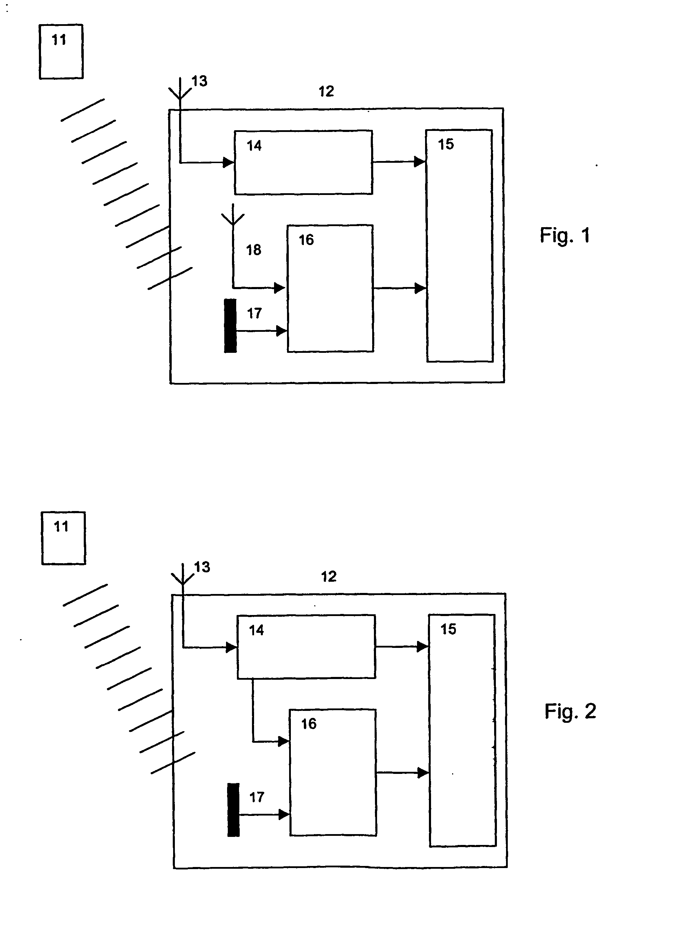

Dans le domaine de la détection de vol, puis plus généralement de l'identification électronique à distance (RFID), il a été imaginé d'utiliser des caractéristiques de discrimination liées aux caractéristiques de champ par interférences constructives ou destructives entre plusieurs antennes constituant un réseau. Le brevet US 4,016,553 décrit ainsi un dispositif dans lequel au moins deux bobines d'émission, contenues dans deux plans parallèles sont connectées en série de manière croisée. Les dimensions des bobines et leur espacement sont ici très faibles relativement à la longueur d'onde (par exemple un dixième de longueur d'onde). Pour une distance lointaine (quelques mètres), il y a donc interférences destructives entre les ondes émises par les deux bobines. Autrement dit, la « zone d'interrogation » est limitée au voisinage du système d'émission (cercle E_{T} en figure 1), ce qui évite de rayonner de l'énergie électromagnétique dans un large périmètre et permet de satisfaire la réglementation à ce sujet. De la même façon, un dispositif identique est utilisé en réception. De ce fait, la présence d'un élément de perturbation du champ sera perçue à l'intérieur d'un cercle E_{R}. Toute émission perturbatrice provenant de points éloignés ne sera pas détectée par cet arrangement.

De la demande de brevet DE 101 16 870, on connaît un dispositif comprenant un émetteur d'ordres et un récepteur d'ordres. Le récepteur comprend des moyens de localisation de l'émetteur par la mesure du niveau des signaux constituant les ordres qu'il reçoit et interprète ces ordres en fonction de la localisation de l'émetteur par rapport au récepteur.

Du brevet US 5,170,172, on connaît un dispositif permettant d'indiquer la distance entre un émetteur et un récepteur de signaux radioélectriques. Le récepteur comprend plusieurs antennes radio disposées de préférence orthogonalement entre elles afin de permettre l'obtention d'une bonne image de la puissance du signal radioélectrique quelle que soit l'orientation du récepteur.

Dans le domaine de la météorologie, le brevet US 3,715,660, décrit un dispositif destiné à mesurer la distance le séparant des éclairs lors d'un orage. Le dispositif comprend une antenne de type bobine pour mesurer la composante magnétique de l'onde électromagnétique produite par l'éclair et une antenne de type quart d'onde pour mesurer la composante électrique de l'onde. L'analyse du rapport entre ces deux grandeurs permet de déterminer la distance à la source de l'onde magnétique.

Les dispositifs décrits précédemment ne permettent pas la mise en oeuvre d'un procédé garantissant qu'un émetteur d'ordres de type radio-électrique se trouve localisé à proximité immédiate du récepteur d'ordres pour valider une transmission d'ordres, et garantissant que le dispositif est insensible à un émetteur surpuissant.

Le but de l'invention est de réaliser un dispositif permettant de mettre en oeuvre un procédé palliant à cet inconvénient et améliorant les procédés connus de l'art antérieur. En particulier, l'invention se propose de réaliser un dispositif permettant l'exécution d'un procédé garantissant qu'un émetteur d'ordres de type radio-électrique se trouve localisé à proximité immédiate du récepteur d'ordres pour valider une transmission d'ordres et garantissant que le dispositif est insensible à un émetteur surpuissant.

La notion de zone dite proche et de zone dite lointaine est définie grâce à la longueur d'onde λ d'un signal radio-électrique, à partir des caractéristiques du champ électromagnétique. Pour des antennes de dimension faible devant la longueur d'onde, la distance de transition entre « champ proche » et « champ lointain » vaut λ/2π (réf. citée page 32-4). Un signal émis depuis un point situé par rapport à un récepteur à plus de 1/6 de la longueur d'onde du signal est alors dit émis depuis une zone lointaine. Un signal émis depuis un point situé par rapport à un récepteur à moins de 1/6 de la longueur d'onde du signal est dit émis depuis une zone proche. Au voisinage du récepteur, le champ électromagnétique dû à un signal est dit lointain s'il a été émis depuis une zone lointaine. Au voisinage du récepteur, le champ électromagnétique dû à un signal est dit proche s'il a été émis depuis une zone proche. Pour un signal, ayant une fréquence de 433 MHz, la transition entre champ proche et champ lointain se fait à environ 12 cm du point d'émission.

Ces distances théoriques sont donc dépendantes du type d'antenne. L'important est de pouvoir associer une distance à une caractéristique électromagnétique du champ.

Le procédé d'interprétation selon l'invention est caractérisé par la partie caractérisante de la revendication 1.

Les revendications dépendantes 2 à 4 définissent des variantes d'exécution du procédé.

Le dispositif récepteur d'ordres selon l'invention est caractérisé par la partie caractérisante de la revendication indépendante 5.

Les revendications dépendantes 6 et 7 définissent des variantes de réalisation du dispositif récepteur d'ordres.

Le dessin annexé, représente à titre d'exemples, trois modes d'exécution du dispositif permettant l'exécution du procédé d'interprétation d'un ordre radio-électrique en fonction de sa zone d'émission.
La figure 1 est une vue schématique d'un dispositif récepteur d'ordres radio-électriques accompagné d'un dispositif émetteur d'ordres selon un premier mode de réalisation.
La figure 2 est une vue schématique d'un dispositif récepteur d'ordres radio-électriques accompagné d'un dispositif émetteur d'ordres selon un second mode de réalisation.
La figure 3 est une vue schématique d'un dispositif récepteur d'ordres radio-électriques accompagné d'un dispositif émetteur d'ordres selon un troisième mode de réalisation.
La figure 4 est un ordinogramme d'un procédé de détermination de la zone d'émission d'un ordre radio-électrique selon l'invention.
La figure 5 est une vue schématique de détail d'un dispositif récepteur d'ordres radio-électriques selon un troisième mode de réalisation.

Le dispositif 12 récepteur d'ordres radio-électriques représenté à la figure 1 permet de recevoir des ordres radio-électriques destinés à commander un équipement électrique (non représenté) d'un bâtiment tel qu'un élément de fermeture, d'occultation ou de protection solaire. Ce dispositif comprend une antenne 13 dite antenne principale recevant des ondes électromagnétiques de type radio, un récepteur radio-électrique 14 comportant des étages d'amplification, de démodulation de fréquence ou d'amplitude, raccordé en entrée à cette antenne 13 et en sortie à une unité de commande 15 de l'équipement. Cette chaîne constituée de l'antenne principale 13, du récepteur radio-électrique 14 et de l'unité de commande 15 permet l'exécution d'une action par l'équipement. Cette action est associée à un ordre de nature radio-électrique émis par un émetteur de commande à distance 11 et reçu par l'antenne principale 13. Le dispositif 12 récepteur d'ordres radio-électriques comprend aussi une unité 16 de traitement et d'analyse des ordres de nature radio-électrique reçus par deux antennes auxiliaires 17 et 18. Cette unité 16 permet de déterminer si l'ordre radio-électrique, reçu par l'antenne principale 13 mais aussi par les deux antennes 17 et 18, a été émis par un émetteur de commande à distance depuis une zone dite proche ou depuis une zone dite lointaine. Le dispositif et le procédé selon l'invention utilisent les propriétés des champs proches et des champs lointains pour déterminer la zone depuis laquelle l'ordre radio-électrique a été émis. Une caractéristique importante de la puissance rayonnée en champ proche est de décroître sensiblement de manière inversement proportionnelle à la distance, alors que cette décroissance est liée au carré de la distance en champ lointain. Par ailleurs, il est connu que la composition électromagnétique de l'onde évolue: pour une onde plane ou en champ lointain, les champs électrique E et magnétique H sont dans un rapport constant (impédance de l'air, égale à 120π soit 377 ohms), alors que la composante magnétique H est prépondérante en champ proche, le rapport sensiblement constant étant atteint au-delà de la transition entre champ proche et lointain.

Dans un premier mode d'exécution du dispositif selon l'invention, représenté à la figure 1, l'antenne auxiliaire 17 est une antenne de type bobine et l'antenne auxiliaire 18 est une antenne de type quart d'onde. L'antenne 17 délivre, lors de la réception d'un ordre radio-électrique, un signal essentiellement représentatif des variations temporelles du champ magnétique H. L'antenne 18 délivre, lors de la réception d'un ordre radio-électrique, un signal représentatif des variations temporelles du champ magnétique H et du champ électrique E. En comparant ces deux signaux ou leurs puissances, on identifie la zone d'émission de l'ordre radio-électrique. En effet, si un ordre a été émis depuis la zone proche, le rapport *puissance reçue par antenne 17* / *puissance reçue par antenne 18* est sensiblement plus élevé que si l'ordre a été émis depuis la zone lointaine. Deux antennes auxiliaires de type différent permettent donc, préférentiellement par apprentissage, d'établir une loi de variation des puissances reçues en fonction de la distance de la source, et donc de remonter à la distance à partir d'une comparaison des puissances.

IL est à noter que si on choisit une première antenne auxiliaire de type bobine, donc essentiellement sensible à la composante magnétique du champ, on peut choisir une deuxième antenne auxiliaire de tout type différent, pourvu qu'elle soit majoritairement ou au moins significativement sensible au champ électrique. Dans un deuxième mode de réalisation représenté à la figure 2, afin de simplifier le montage, une antenne auxiliaire est remplacée par une sortie du récepteur radio-électrique 14 donnant directement le niveau de puissance reçue sur l'antenne principale 13. Ces sorties sont communément appelées RSSI pour *Received Signal Strengh Indicator.* A titre d'exemple, le circuit CC1000 commercialisé par la société CHIPCON présente une telle sortie analogique sur sa borne 28.

Dans les deux modes d'exécution précédents, les signaux issus des antennes peuvent être ajustés, par exemple à l'aide de diviseurs potentiométriques, de manière à présenter une même amplitude au niveau de la transition entre champ proche et champ lointain.

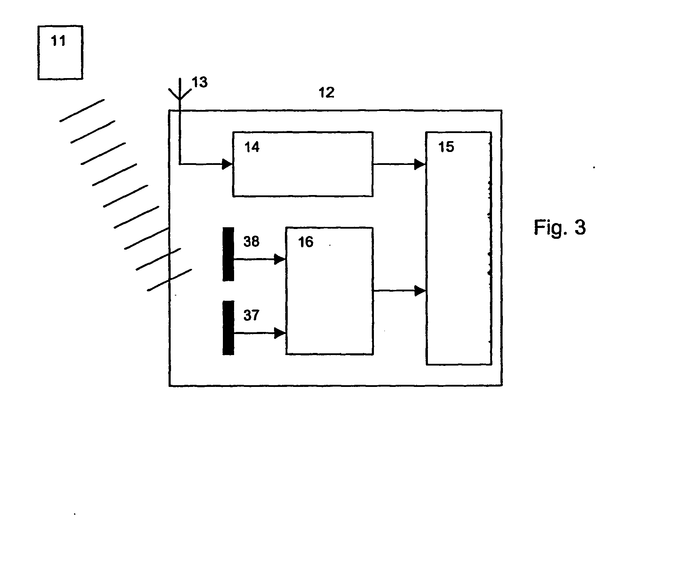

Un troisième mode d'exécution représenté à la figure 3 consiste à utiliser deux antennes auxiliaires 37 et 38 du même type à savoir de type bobine multispires. Ces deux antennes sont disposées sensiblement l'une derrière l'autre depuis le point d'émission de l'ordre radio-électrique. La distance entre ces antennes, qu'il faut choisir inférieure à la longueur d'onde, se traduit par une diminution significative du signal reçu sur l'antenne la plus éloignée de la source, pour autant que les conditions de champ proche soient réunies. En cas de source distante, les puissances reçues par chaque bobine sont au contraire quasiment identiques. Par exemple, pour un ordre émis à une fréquence de 433 MHz et pour une distance de 3 cm entre l'antenne 37 et 38 :
- si l'ordre est émis depuis un point situé à 1 m du dispositif, on détecte une différence de puissance reçue de 6% entre les deux antennes 37 et 38,
- si l'ordre est émis depuis un point situé à 8 cm du dispositif, on détecte une différence de puissance reçue de 37% entre les deux antennes 37 et 38.

De manière préférée, on choisira deux antennes pratiquement coplanaires et disposées chacune sous forme de pistes concentriques sur un même circuit imprimé. Le fait d'utiliser les deux faces du circuit permet, s'il y a lieu, de superposer partiellement les deux bobines.

Dans cette configuration, la plus grande précision sur la détermination de la distance de la source sera atteinte si cette dernière est dans le plan des bobines, sur l'axe joignant les centres de celles-ci.

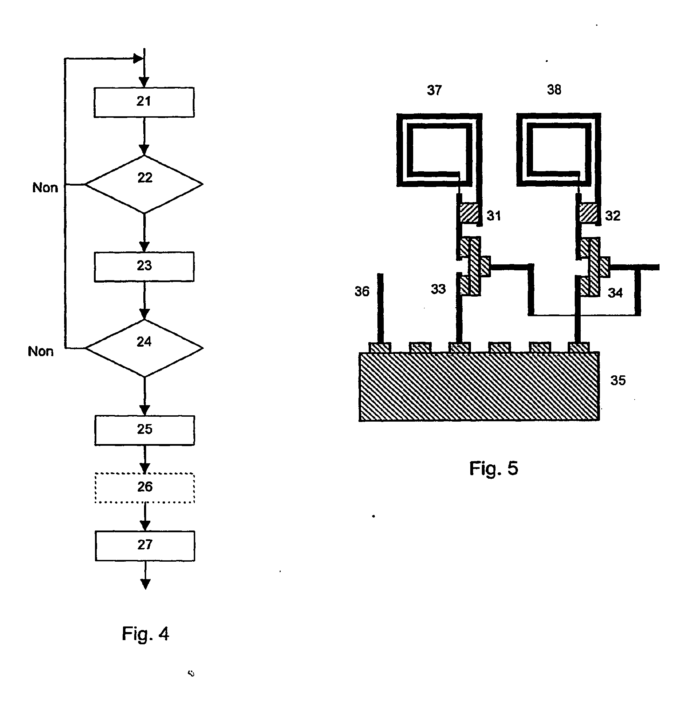

Ce troisième mode de réalisation sera préféré au précédent si le récepteur radio-électrique 14 ne comporte pas de sortie analogique de mesure de puissance du signal émis par l'antenne principale 13. Ce mode de réalisation est extrêmement simple et très peu coûteux : la figure 5 montre un circuit imprimé comportant les composants nécessaires en implantation CMS : les deux antennes auxiliaires 37 et 38 accordées à la fréquence de réception par des condensateurs 31 et 32 et deux transistors 33 et 34 montés en collecteur commun pour permettre à la fois l'amplification et le redressement du courant arrivant depuis l'antenne sur leur base. Chaque émetteur de transistor est raccordé à une entrée de mesure analogique d'un microcontrôleur 35. On n'a pas représenté une liaison de masse commune entre les deux antennes (sorties non reliées aux bases de transistors) et la référence de masse du circuit 35. Au prix de quelques composants supplémentaires, il est de la même façon et avantageusement possible d'utiliser un montage émetteur commun, pour bénéficier aussi d'une amplification de tension. Ces montages sont connus de l'homme du métier. L'antenne principale 13 et le récepteur radio-électrique n'ont pas été représentés sur cette figure. Une liaison 36 raccorde la sortie de ce récepteur radio-électrique à une entrée du microcontrôleur 35.

Dans tous les modes de réalisation, les signaux issus des antennes peuvent être combinés avant traitement, par exemple par mise en série soustractive. La comparaison porte alors sur le résultat de la soustraction par rapport à un seuil fixé.

Dans le cas du mode de réalisation à deux bobines, comme il est connu de la technique pour d'autres applications (brevets US 3,182,314 et US 2,597,518), les deux bobines mises en série peuvent former un 8 sur le plan du circuit imprimé.

La comparaison peut être réalisée simplement à l'aide d'un comparateur analogique. Il est également possible pour faire la mesure des amplitudes des signaux d'utiliser directement les entrées analogiques d'un contrôleur, s'il s'agit par exemple d'un microcontrôleur.

Un ordinogramme du procédé d'interprétation d'un ordre est représenté à la figure 4. Une première étape 21 représente l'attente de réception d'un signal. Si un signal est reçu et démodulé par le récepteur, la trame reçue est analysée au cours de l'étape 22 pour savoir s'il s'agit d'une trame valide. Si tel est le cas, on passe à l'étape 23 au cours de laquelle on procède à l'acquisition et à un éventuel traitement préliminaire des signaux reçus sur les entrées de l'unité de traitement 16. La comparaison de ces signaux a lieu à l'étape 24. Cette comparaison porte directement sur les signaux issus des antennes ou sur le résultat de traitements des données issues de ces signaux de manière à recueillir l'image de l'amplitude ou de la puissance reçue sur chaque antenne. Si la différence entre les amplitudes ou puissances est supérieure à un seuil donné, on passe à l'étape 25 tandis qu'on retourne à l'étape 21 dans le cas contraire. A l'étape 25, les conditions de détection de champ proche sont remplies : on active donc le mode de « proximité » au sein de l'unité de commande 15. Dans le cas cité d'un dispositif pour portail ou porte de garage, ce mode de proximité peut être par exemple celui de mise en apprentissage d'un nouvel identifiant d'émetteur. Au cours de l'étape facultative 26, la différence ou le rapport des puissances reçues sur les antennes est utilisé pour déterminer la distance de l'émetteur, soit grâce à un algorithme utilisant une formule de décroissance du champ, soit par une lecture dans une table prédéfinie ou encore par comparaison avec des valeurs acquises dans une phase d'apprentissage. Ces différentes méthodes sont connues de l'homme du métier. Au cours de l'étape 27, la commande contenue dans la trame captée par l'antenne principale 13 et le récepteur radio-électrique 14 est exécutée. Si on se réfère au même exemple que précédemment, cet ordre peut être un ordre d'appariement, contenant l'identifiant du transmetteur d'ordres. Ainsi la procédure d'appariement s'est réalisée d'une manière extrêmement simple. Il peut bien entendu s'agir d'une toute autre commande, par exemple d'une commande de montée ou de descente dans un fonctionnement de type « homme mort », l'émetteur étant déjà connu du récepteur.

## Revendications

1. Procédé d'interprétation d'un ordre radio-électrique destiné à commander un élément de fermeture, d'occultation ou de protection solaire d'un bâtiment, **caractérisé en ce qu'**il comprend les étapes suivantes :
- déterminer des caractéristiques électromagnétiques du champ provoqué par l'ordre radio-électrique au voisinage d'un dispositif récepteur d'ordres radio-électriques,
- comparer entre elles ces caractéristiques,
- déterminer, avec la comparaison de l'étape précédente, si le point d'émission de l'ordre radio-électrique est situé dans une zone dite proche ou dans une zone dite lointaine,
- exécuter une commande en fonction de l'ordre reçu et en fonction de la zone d'émission de l'ordre.

2. Procédé selon la revendication 1, **caractérisé en ce que** l'étape :
- déterminer des caractéristiques électromagnétiques du champ provoqué par l'ordre radio-électrique au voisinage d'un dispositif récepteur d'ordres radio-électriques,
comprend :
- recevoir un signal, relatif à la composante magnétique de l'onde électromagnétique transportant l'ordre radio-électrique, en deux points disposés sensiblement l'un derrière l'autre depuis le point d'émission,
- mesurer l'amplitude ou la puissance, ou toute grandeur liée à l'amplitude ou la puissance, de chacun de ces deux signaux.

3. Procédé selon la revendication 1, **caractérisé en ce que** l'étape :
- déterminer des caractéristiques électromagnétiques du champ provoqué par l'ordre radio-électrique au voisinage d'un dispositif récepteur d'ordres radio-électriques,
comprend :
- recevoir en un point un signal, relatif à la composante magnétique de l'onde électromagnétique transportant l'ordre radio-électrique, et en un autre point, pouvant être confondu avec le précédent, un signal relatif à la composante électrique de l'onde électromagnétique,
- mesurer l'amplitude ou la puissance, ou toute grandeur liée à l'amplitude ou la puissance, de chacun de ces deux signaux.

4. Procédé selon la revendication 1, **caractérisé en ce que** l'étape :
- déterminer des caractéristiques électromagnétiques du champ provoqué par l'ordre radio-électrique au voisinage d'un dispositif récepteur d'ordres radio-électriques,
comprend :
- recevoir en un point un signal, relatif à la composante magnétique de l'onde électromagnétique transportant l'ordre radio-électrique, et en un autre point, pouvant être confondu avec le précédent, un signal relatif à une combinaison de la composante magnétique et de la composante électrique de l'onde électromagnétique,
- mesurer l'amplitude ou la puissance, ou toute grandeur liée à l'amplitude ou la puissance, de chacun de ces deux signaux.

5. Dispositif (12) récepteur d'ordres radio-électriques destinés à commander un élément de fermeture, d'occultation ou de protection solaire d'un bâtiment, comprenant
une unité de commande (15) de l'équipement,
un récepteur d'ondes radio-électriques (14) comportant une antenne principale (13), au moins un étage d'amplification et un étage de démodulation, raccordé en sortie à l'unité de commande (15) de l'équipement,
des moyens de détermination de la zone d'émission d'un ordre radio-électrique
pour déterminer si le point d'émission de l'ordre radio-électrique est situé dans une zone dite proche ou dans une zone dite lointaine, raccordés à l'unité de commande, comportant au moins deux antennes (17, 18 ;37, 38) et des moyens (16) d'analyse et/ou de traitement de l'ordre reçu par chaque antenne (17, 18 ; 37, 38) et permettant la détermination de la zone d'émission de l'ordre radio-électrique,
**caractérisé en ce que** les antennes (17, 18; 37, 38) faisant partie des moyens de détermination de la zone d'émission sont toutes de type bobine et sont sensiblement disposées l'une derrière l'autre depuis le point d'émission du signal radio-électrique ou **en ce que** les antennes (17, 18; 37, 38) faisant partie des moyens de détermination de la zone d'émission sont de types différents.

6. Dispositif selon la revendication 5, **caractérisé en ce que** les moyens de détermination de la zone d'émission de l'ordre radio-électrique comprennent l'antenne principale (13) et une antenne auxiliaire (17).

7. Dispositif selon la revendication 5, **caractérisé en ce que** les moyens de détermination de la zone d'émission de l'ordre radio-électrique comprennent deux antennes auxiliaires (17, 18 ; 37, 38).

## Claims

1. A method for interpreting a radio-electrical command intended for controlling a closure, privacy or solar protection element of a building, **characterized in that** it comprises the following steps:
- determining electromagnetic characteristics of the field caused by the radio-electrical command in the vicinity of a device for receiving radio-electrical commands,
- comparing these characteristics with one another,
- determining, with the comparison of the preceding step, whether the transmission point of the radio-electrical command lies in a so-called near-field zone or in a so-called far-field zone,
- executing a control as a function of the received command and as a function of the transmission zone of the command.

2. The method as claimed in claim 1, **characterized in that** the step of:
- determining electromagnetic characteristics of the field caused by the radio-electrical command in the vicinity of a device for receiving radio-electrical commands,
comprises:
- receiving a signal that relates to the magnetic component of the electromagnetic wave carrying the radio-electrical command, at two points lying substantially one behind the other in the direction coming from the transmission point,
- measuring the amplitude or power, or any quantity associated with the amplitude or power, of each of these two signals.

3. The method as claimed in claim 1, **characterized in that** the step of:
- determining electromagnetic characteristics of the field caused by the radio-electrical command in the vicinity of a device for receiving radio-electrical commands,
comprises:
- receiving a signal that relates to the magnetic component of the electromagnetic wave carrying the radio-electrical command at one point, and receiving a signal that relates to the electric component of the electromagnetic wave at another point, which may be same as the first point,
- measuring the amplitude or power, or any quantity associated with the amplitude or power, of each of these two signals.

4. The method as claimed in claim 1, **characterized in that** the step of:
- determining electromagnetic characteristics of the field caused by the radio-electrical command in the vicinity of a device for receiving radio-electrical commands,
comprises:
- receiving a signal that relates to the magnetic component of the electromagnetic wave carrying the radio-electrical command at one point, and receiving a signal that relates to a combination of the magnetic component and the electric component of the electromagnetic wave at another point, which may be same as the first point,
- measuring the amplitude or power, or any quantity associated with the amplitude or power, of each of these two signals.

5. A device (12) for receiving radio-electrical commands which are intended to control a closure, privacy or solar protection element of a building, comprising
a unit (15) for controlling the equipment,
a radio-electrical wave receiver (14) having a main antenna (13), at least an amplification stage and a demodulation stage, the output of which is connected to the control unit (15) of the equipment,
means which are connected to the control unit for determining the transmission zone of the radio-electric command, for determining whether the transmission point of the radio-electrical command lies in a so-called near-field zone or in a so-called far-field zone, having at least two antennas (17, 18; 37, 38) and means (16) for analyzing and/or processing the command received by each antenna (17, 18; 37, 38) and making it possible to determine the transmission zone of the radio-electric command,
**characterized in that** the antennas (17, 18; 13, 17; 37, 38) forming part of the means for determining the transmission zone are all of the coil type and are substantially arranged one behind the other in the direction coming from the transmission point of the radio-electric signal, or **in that** the antennas (17, 18; 13, 17; 37, 38) forming part of the means for determining the transmission zone are of different types.

6. The device as claimed in claim 5, **characterized in that** the means for determining the transmission zone of the radio-electric command comprise the main antenna (13) and an auxiliary antenna (17).

7. The device as claimed in claim 5, **characterized in that** the means for determining the transmission zone of the radio-electric command comprise two auxiliary antennas (17, 18; 37, 38).

## Patentansprüche

1. Verfahren zur Auswertung eines per Funk übermittelten Befehls, der dazu bestimmt ist, ein Element zum Verschliessen, zum Verdunkeln oder zum Sonnenschutz an einem Gebäude zu steuern, **dadurch gekennzeichnet, dass** es die folgenden Schritte enthält:
- Bestimmung der elektromagnetischen Eigenschaften des durch den Funkbefehl erzeugten Felds in der Nähe einer Empfangsvorrichtung für Funkbefehle,
- Vergleich der Eigenschaften miteinander,
- Ermittlung unter Berücksichtigung des Vergleichs im vorhergehenden Schritt, ob sich der Ort des Absendens des Funkbefehls in einer sogenannten Nahzone oder in einer sogenannten Fernzone befindet,
- Ausführung einer Anweisung in Abhängigkeit vom empfangenen Befehl und von der Sendezone des Funkbefehls.

2. Verfahren nach Anspruch 1, **dadurch gekennzeichnet, dass** der Schritt zur Bestimmung der elektromagnetischen Eigenschaften des durch den Funkbefehl erzeugten Felds in der Nähe einer Empfangsvorrichtung für Funkbefehle wie folgt ausgeführt wird:
- Empfang eines Signals bezüglich der magnetischen Komponente der elektromagnetischen Welle, welche den Funkbefehl transportiert, an zwei Stellen, welche in Richtung des Sendeorts im Wesentlichen hintereinander angeordnet sind,
- Messung der Amplitude oder der Intensität oder von beliebigen anderen Grössen, die in Beziehung zur Amplitude oder zur Intensität stehen, von jedem dieser beiden Signale.

3. Verfahren nach Anspruch 1, **dadurch gekennzeichnet, dass** der Schritt zur Bestimmung der elektromagnetischen Eigenschaften des durch den Funkbefehl erzeugten Felds in der Nähe einer Empfangsvorrichtung für Funkbefehle wie folgt ausgeführt wird:
- Empfang eines Signals bezüglich der magnetischen Komponente der elektromagnetischen Welle, die den Funkbefehl überträgt, an einer Stelle sowie Empfang eines Signals bezüglich der elektrischen Komponente der elektromagnetischen Welle an einer anderen Stelle, welche sich auch an der gleichen Stelle befinden kann,
- Messung der Amplitude oder der Intensität oder von beliebigen anderen Grössen, die in Beziehung zur Amplitude oder zur Intensität stehen, von jedem dieser beiden Signale.

4. Verfahren nach Anspruch 1, **dadurch gekennzeichnet, dass** der Schritt der Bestimmung der elektromagnetischen Eigenschaften des durch den Funkbefehl erzeugten Felds in der Nähe einer Empfangsvorrichtung für Funkbefehle wie folgt ausgeführt wird:
- Empfang eines Signals bezüglich der magnetischen Komponente der elektromagnetischen Welle, welche den Funkbefehl übermittelt, an einer Stelle und Empfang eines Signals bezüglich einer Kombination der magnetischen Komponente und der elektrischen Komponente der elektromagnetischen Welle an einer anderen Stelle, welche sich auch an der ersten Stelle befinden kann,
- Messung der Amplitude oder der Intensität oder von beliebigen anderen Grössen, die in Beziehung zur Amplitude oder zur Intensität stehen, von jedem dieser beiden Signale.

5. Vorrichtung (12) zum Empfang von Befehlen, die per Funk übermittelt werden und dazu bestimmt sind, ein Element zum Verschliessen, zum Verdunkeln oder zum Sonnenschutz an einem Gebäude zu steuern, mit folgenden Elementen:
einer Einheit (15) zum Steuern der Anlage,
einen Empfänger (14) für Funkwellen, welcher eine Hauptantenne (13), mindestens eine Verstärkerstufe und eine Demodulatorstufe enthält, welche an den Ausgang der Einheit (15) zum Steuern der Anlage angeschlossen ist,
Mittel zur Bestimmung der Sendezone eines Funkbefehls zwecks Ermittlung, ob sich der Ort des Absendens des Funkbefehls in einer sogenannten Nahzone oder in einer sogenannten Fernzone befindet, wobei diese Mittel an der Steuereinheit angeschlossen sind und mindestens zwei Antennen (17, 18; 37, 38) sowie Mittel (16) zur Analyse und/oder zur Verarbeitung der Befehle aufweisen, welche von jeder Antenne (17, 18; 37, 38) aufgefangen werden und die Bestimmung der Sendezone des Funkbefehls ermöglichen,
**dadurch gekennzeichnet, dass** die Antennen (17, 18; 37, 38) Bestandteil der Mittel zur Bestimmung der Sendezone sind und alle in Form von Spulen vorliegen und in Richtung auf den Sendeort des Funksignals im Wesentlichen hintereinander ausgerichtet sind, oder dass die Antennen (17, 18; 37, 38) Bestandteil der Mittel zur Bestimmung der Sendezone sind und als unterschiedliche Typen vorliegen.

6. Vorrichtung nach Anspruch 5, **dadurch gekennzeichnet, dass** die Mittel zur Bestimmung der Sendezone des Funkbefehls die Hauptantenne (13) und eine Hilfsantenne (17) aufweisen.

7. Vorrichtung nach Anspruch 5, **dadurch gekennzeichnet, dass** die Mittel zur Bestimmung der Sendezone des Funkbefehls zwei Hilfsantennen (17, 18; 37, 38) aufweisen.
